# EUROPÄISCHE PATENTSCHRIFT

(11) **EP 1 511 948 B1**
(45) Veröffentlichungstag und Bekanntmachung des Hinweises auf die Patenterteilung: **21.01.2009**
(21) Anmeldenummer: 03737909.6
(22) Anmeldetag: 26.05.2003
(51) Int. Cl.: F16D 48/06, F16H 59/00

(54) **VERFAHREN ZUM BETREIBEN EINES ANTRIEBSSTRANGS MIT VERARBEITUNG DES MOTORKENNWERTS MITTELS PARALLELAUSWERTUNG UND PT1-FILTERUNG**
METHOD FOR OPERATING A DRIVE TRAIN BY TREATING THE MOTOR CHARACTERISTIC BY MEANS OF PARALLEL EVALUATION AND PT1-FILTERING
PROCEDE POUR FAIRE FONCTIONNER UN ENSEMBLE TRANSMISSION AVEC TRAITEMENT DE LA CARACTERISTIQUE DU MOTEUR PAR EVALUATION EN PARALLELE ET FILTRAGE PT1

(30) Priorität: 27.05.2002 DE 10223463
(43) Veröffentlichungstag der Anmeldung: 09.03.2005
(73) Patentinhaber: LuK Lamellen und Kupplungsbau Beteiligungs KG, 77815 Bühl (DE)
(72) Erfinder: REIBOLD, Ekkehard, 77933 Lahr (DE)
(86) Internationale Anmeldenummer: PCT/DE2003/001711
(87) Internationale Veröffentlichungsnummer: WO 2003/100280

(56) Entgegenhaltungen:
- DE-A- 10 052 472
- DE-A- 19 504 847
- DE-A- 19 819 780
- DE-A- 19 832 939
- FR-A- 2 763 108
- FR-A- 2 767 884
- FR-A- 2 771 470
- US-A- 5 875 679

## Beschreibung

Die Erfindung betrifft ein Verfahren zum Betreiben und/oder Steuern eines Antriebsstrangs eines Kraftfahrzeugs und/oder wenigstens eines seiner Bauteile, ein Verfahren zum Betreiben einer Reibungskupplungseinrichtung sowie eine elektronisch gesteuerte Kupplungseinrichtung.

Verfahren zum Betreiben und/oder Steuern eines Antriebsstrangs eines Kraftfahrzeugs und/oder seiner Bauteile, Verfahren zum Betreiben einer Reibungskupplungseinrichtung sowie elektronisch gesteuerte Kupplungseinrichtungen sind bereits allgemein bekannt.

Der Erfindung liegt die Aufgabe zugrunde, ein Verfahren zum Betreiben und/oder Steuern eines Kraftfahrzeugsantriebsstrangs oder wenigstens seiner Bauteile zu schaffen, das betriebssicher ist, sowie ein Verfahren zum Betreiben einer Reibungskupplungseinrichtung, das betriebssicher ist, und eine elektronisch gesteuerte Kupplungseinrichtung, die betriebssicher ist.

Die Aufgabe wird gelöst durch ein Verfahren zum Betreiben und / oder Steuern eines Kraftfahrzeug-Antriebsstranges und / oder wenigstens eines seiner Bauteile, wobei dieser Antriebsstrang antriebsseitig mit einer Brennkraftmaschine gekoppelt ist und wobei in diesem Antriebsstrang eine Kupplungseinrichtung sowie eine Getriebeeinrichtung angeordnet ist und wobei abtriebsseitig des Antriebsstranges Räder so angeordnet sind, dass sie von der Brennkraftmaschine über den Antriebsstrang angetrieben werden können, **dadurch gekennzeichnet, dass** wenigstens ein Eingangssignal, welches der zeitliche Verlauf wenigstens eines Drehkennwerts des Motors eines Antriebstrangabschnitts und / oder die jeweils korrespondierende Leistung ist, in einem Zeitfenster erfasst und parallel mehrfach gemäß unterschiedlichen Charakteristiken elektronisch verarbeitet und / oder ausgewertet wird, und dass mittels wenigstens eines Vergleichs der verschiedenen Verarbeitungs- und / oder Auswerteergebnisse des gleichen Eingangssignals ermittelt wird, ob sich das Übertragungsverhalten des Antriebsstranges oder wenigstens eines vorbestimmten Antriebsstrangbauteils verändert. Weiterhin wird die Aufgabe gelöst durch ein Verfahren zum Betreiben einer Reibungskupplungseinrichtung, die in einem Antriebsstrang angeordnet ist, welcher von einer Antriebseinrichtung, wie Brennkraftmaschine, belastet werden kann, dadurch gekennzeichnet, dass ermittelt und / oder überwacht wird, ob sich das Momentenübertragungsverhalten der Reibungskupplungseinrichtung verändert, und zwar insbesondere durch Erwärmung und / oder Verformung der Reibungskupplungseinrichtung verändert. Weiterhin wird die Aufgabe durch eine mittels der erfindungsgemäßen Verfahren elektronisch gesteuerte Kupplungseinrichtung gelöst.

Erfindungsgemäß ist insbesondere ein Verfahren zum Betreiben und/oder Steuern eines Kraftfahrzeugsantriebsstrangs und/oder wenigstens eines Bauteils, das in diesem Antriebsstrang angeordnet ist, vorgesehen.
Der Antriebsstrang ist antriebsseitig so mit einer Brennkraftmaschine gekoppelt, dass er von dieser belastet werden kann. Im Antriebsstrang ist eine Kupplungseinrichtung sowie eine Getriebeeinrichtung vorgesehen.

Die Kupplungseinrichtung ist vorzugsweise als Reibungskupplungseinrichtung gestaltet. Besonders bevorzugt ist die Kupplungseinrichtung eine elektronisch gesteuerte Kupplungseinrichtung. Eine solche elektronisch gesteuerte Kupplungseinrichtung kann beispielsweise so gestaltet sein, wie diejenigen, die von der Anmelderin unter der Bezeichnung "elektronisches Kupplungsmanagement" (EKM) angeboten werden. Die Kupplungseinrichtung kann aber auch anders gestaltet sein.

Die Getriebeeinrichtung kann grundsätzlich beliebig gestaltet sein. Eine solche Getriebeeinrichtung kann beispielsweise als Stufengetriebe oder als stufenloses Getriebe gestaltet sein. Rein beispielhaft sei erwähnt, dass eine solche Getriebeeinrichtung als konventionelles Handschaltgetriebe oder als Automatengetriebe oder als automatisiertes Schaltgetriebe (ASG) gestaltet sein kann. Auch andere Getriebegestaltungen sind bevorzugt.

Abtriebsseitig des Antriebsstranges sind Räder so angeordnet, dass sie von der Brennkraftmaschine über den Antriebsstrang angetrieben werden können.

Erfindungsgemäß ist insbesondere vorgesehen, dass ein Eingangssignal ermittelt oder erfasst und mehrfach gemäß unterschiedlichen Charakteristiken verarbeitet und/oder ausgewertet wird, und zwar parallel. Dies ist insbesondere so zu verstehen, dass das gleiche Eingangssignal gemäß unterschiedlichen Charakteristiken verarbeitet und/oder ausgewertet wird. Die Parallelität kann so gegeben sein, dass die Verarbeitung oder Auswertung zeitlich parallel oder überlappend verläuft, oder zeitlich verschoben.

Es kann auch vorgesehen sein, dass das gleiche Eingangssignal parallel mehrfach gemäß unterschiedlichen Charakteristiken verarbeitet und/oder ausgewertet wird, und diese verschiedenen Auswerteergebnisse gemeinsam verarbeitet werden, und dass parallel zu diesem Gesamtprozess, also der mehrfachen (parallelen) Verarbeitung und/oder Auswertung des gleichen Eingangssignals mit (sich in Reihe) anschließender Verarbeitung und/oder Auswertung der Ergebnisse, eine Verarbeitung oder Auswertung des gleichen ursprünglichen Eingangssignals durchgeführt wird.

Die jeweiligen Ergebnisse können - bevorzugt - gemeinsam verarbeitet und / oder ausgewertet und / oder miteinander verglichen werden.

Das Eingangssignal ist insbesondere der zeitliche Verlauf eines Drehkennwerts des Motors und/oder wenigstens eines Antriebsstrangabschnitts. Ein Drehkennwert ist im Sinne der vorliegenden Erfindung ein Drehmoment oder eine Drehzahl oder die zeitliche Ableitung eines Drehmoments oder einer Drehzahl. Ein Eingangssignal kann auch die einem solchen Drehkennwert zugeordnete bzw. die mit einem solchen Drehkennwert korrespondierende Leistung sein, bzw. die Leistung eines Bauteils, dem der betreffende Drehkennwert zugeordnet ist.

Erfindungsgemäß ist insbesondere vorgesehen, dass mittels wenigstens eines Vergleichs verschiedener Verarbeitungs- und/oder Auswerteergebnisse des gleichen Eingangssignals ermittelt wird, ob sich das Übertragungsverhalten des Antriebsstrangs oder wenigstens einer Komponente eines solchen Antriebsstrangs verändert hat.

In einer bevorzugten Gestaltung ist eine solche Komponente eine Kupplungseinrichtung; und zwar insbesondere eine Reibungskupplungseinrichtung. Beispielsweise, ohne dass die Erfindung hierdurch beschränkt werden soll, kann vorgesehen sein, dass gemäß einem erfindungsgemäßen Verfahren ermittelt wird, ob sich zeitlich gesehen das von einer solchen Kupplungseinrichtung übertragbare Drehmoment bei gleicher (Schalt)Stellung dieser Kupplungseinrichtung verändert.

Ein Vergleich kann insbesondere in einer Differenzbildung bestehen.

Derartige Vergleichsergebnisse bzw. Differenzen können in einer bevorzugten Gestaltung der Erfindung wiederum verarbeitet und/oder ausgewertet werden oder mit anderen Verarbeitungs- und/oder Auswerte- und/oder Vergleichsergebnissen verglichen werden.

In einer bevorzugten Gestaltung ist vorgesehen, dass zur Verarbeitung und/oder Auswertung zumindest eine PT1-Filterung verwendet wird, und das Eingangssignal und/oder ein Auswerte- bzw. Verarbeitungs- bzw. Vergleichsergebnis einer PT1-Filterung unterzogen wird.

Zur Vereinfachung wird im folgenden von "Verarbeitung" gesprochen, wobei anstelle dessen und/oder ergänzend auch ein "Auswerten" und/oder ein Vergleichen gegeben sein kann.

Es können mehrere, insbesondere parallele oder teilweise parallele, "Verarbeitungsketten" bzw. "-zweige" vorgesehen sein, wobei insbesondere vorgesehen ist, dass ursprünglich bzw. am Anfang eines jeden solcher "Zweige" bzw. einer jeden solcher "Ketten" das gleiche Eingangssignal eingespeist wird.

Vorzugsweise wird wenigstens ein (unverändertes) Eingangssignal einem Vergleich zugeführt. Dies kann insbesondere so sein, dass ein Eingangssignal verarbeitet wird, beispielsweise mittels einer PT1-Filterung, und das Ergebnis dieser Verarbeitung mit dem gleichen Eingangssignal, das im Rahmen einer (parallelen) Verarbeitung nicht verändert wurde, verglichen wird.

Es kann auch vorgesehen sein, dass zunächst das gleiche Eingangssignal in unterschiedlichen Verarbeitungsschritten im wesentlichen parallel verarbeitet wird, die jeweiligen Ergebnisse verglichen werden, und das daraus resultierende Ergebnis mit dem (unveränderten) gleichen Eingangssignal verglichen wird.

In einer bevorzugten Gestaltung wird im Rahmen der Verarbeitung wenigstens zweimal eine PT1-Filterung verwendet, wobei sich diese PT1-Filterungen durch ihre Zeitkonstante unterscheiden. Hierbei ist insbesondere vorgesehen, dass das gleiche Eingangssignal parallel der einen dieser PT1-Filterungen und der anderen dieser PT1-Filterungen zugeführt wird. Unter "parallel" ist in diesem Zusammenhang insbesondere zu verstehen, dass nicht das Ergebnis einer PT1-Filterung einer weiteren PT1-Filterung zugeführt wird, sondem dass vielmehr ein identisches Signal diesen jeweiligen PT1-Filterungen zugeführt wird bzw. dass diese PT1-Filterungen in verschiedenen "Verarbeitungszweigen" vorgenommen werden.

In einer weiteren bevorzugten Gestaltung wird das Ergebnis einer solchen PT1-Filterung mit einem ursprünglichen Eingangssignal oder mit den Ergebnis einer PT1-Filterung mit anderer Zeitkonstante verglichen. Bevorzugt ist ferner, dass das Ergebnis eines solchen Vergleichs wiederum einer PT1-Filterung zugeführt wird oder mit einem anderen Ergebnis (einer PT1-Filterung oder einem (ursprünglichen) Eingangssignal) verglichen wird.

Bevorzugt ist vorgesehen, dass sich wenigstens zwei Zeitkonstanten einer PT1-Filterung sich wenigstens um den Faktor "2" unterscheiden. Bevorzugt ist ferner, dass sich zwei Zeitkonstanten einer PT1-Filterung wenigstens um den Faktor "3" oder wenigstens um den Faktor "5" oder wenigstens um den Faktor "10" unterscheiden. Auch andere Faktoren sind bevorzugt.

Insbesondere kann vorgesehen sein, dass eine PT1-Filterung die Zeitkonstante "100 Millisekunden (ms)", eine weitere PT1-Filterung die Zeitkonstante "500 ms" und eine weitere PT1-Filterung die Zeitkonstante "5 ms" aufweist. Durch diese beispielhaften Werte soll die Erfindung nicht beschränkt werden.

In einer bevorzugten Gestaltung wird wenigstens ein Ergebnis eines Vergleichs im Rahmen der Ermittlung, ob sich das Übertragungsverhalten des Antriebsstrangs oder eines Antriebsstrangbauteils verändert hat, erneut elektronisch verarbeitet und/oder ausgewertet und/oder mit einem Auswerte- und/oder Verarbeitungs- und/oder Vergleichsergebnis verglichen.

Erfindungsgemäß ist insbesondere ein Verfahren zum Betreiben einer Reibungskupplungseinrichtung vorgesehen, die in einem Antriebsstrang angeordnet ist. Der Antriebsstrang kann von einer Antriebseinrichtung, wie beispielsweise Brennkraftmaschine, belastet werden. Im Rahmen des Verfahrens wird insbesondere ermittelt und/oder überwacht, ob sich das Momentenübertragungsverhalten der Reibungskupplungseinrichtung verändert, und zwar insbesondere durch Erwärmung und/oder Verformung der Reibungskupplungseinrichtung.

Beispielsweise, ohne dass die Erfindung hierdurch beschränkt werden soll, kann vorgesehen sein, dass Kupplungsdeformationen, die auf ein Dauerkriechen der Reibungskupplungseinrichtung zurückzuführen sind, mittels des erfindungsgemäßen Verfahrens ermittelt werden. Solche Kupplungsdeformationen können, beispielsweise ohne dass die Erfindung hierdurch beschränkt werden soll, Deformationen einer Kupplungsdruckplatte oder einer Kupplungsschwungscheibe oder dergleichen sein.

Ein solches Dauerkriechen kann beispielsweise, aber auch hierdruch soll die Erfindung nicht beschränkt werden, gegeben sein, wenn das Kraftfahrzeug bzw. die Kupplungseinrichtung im Kriechbetrieb betrieben wird und eine Bewegung des Kraftfahrzeuges, beispielsweise durch einen Kantstein, eine Steigung oder ein sonstiges Hindernis, verhindert wird. Diese Hinderung kann insbesondere darauf zurückzuführen sein, dass das im Kriechbetrieb von der Kupplungseinrichtung übertragbare Moment gering ist, wobei die Kupplungseinrichtung schlupft.

Bevorzugt wird die Ermittlung und Überwachung von solchen Veränderungen des Momentenübertragungsverhaltens der Kupplungseinrichtung in Abhängigkeit wenigstens eines Betriebskennwerts eines Kraftfahrzeugs, in welchem der Antriebsstrang bzw. die Reibungskupplungseinrichtung angeordnet ist oder angeordnet sein kann, durchgeführt.

Bevorzugt ist ferner, dass zur Ermittlung und/oder Überwachung das Motormoment einer Brennkraftmaschine, die den Antriebsstrang belastet, bzw. dessen zeitliche Ableitung ausgewertet wird.

Dieses Motormoment kann beispielsweise, ohne dass die Erfindung hierdurch beschränkt werden soll, berechnet sein und über einer CAN-Bus bereitgestellt werden.

Bevorzugt ist ferner, dass zur Übermittlung und/oder Überwachung von Veränderungen des Momentenübertragungsverhaltens der Reibungskupplungseinrichtung das Kurbelwellenmoment oder die zeitliche Ableitung des Kurbelwellenmoments einer von einer Brennkraftmaschine antreibbaren oder angetriebenen Kurbelwelle ausgewertet bzw. verarbeitet wird.

In einer bevorzugten Gestaltung wird zur Ermittlung und/oder Überwachung von Veränderungen des Momentenübertragungsverhaltens der Reibungskupplungseinrichtung eine Multizeitskalen-Analyse durchgeführt. Eine solche Multizeitskalen-Analyse kann insbesondere so sein, dass ein Zeitsignal x (t) mit Hilfe einer geeigneten mathematischen Funktion auf verschiedenen Zeitskalen τᵢ beobachtet wird, also beispielsweise Funktionen F (x(t), 0), F (X(t), τ₁), F (x(t), τ₂), ...

In einer bevorzugten Gestaltung ist vorgesehen, dass sich mittels einer solchen Zeitskalenanalyse die Ergebnisse auf verschiedenen Zeitskalen voneinander separieren lassen.

Besonders bevorzugt ist vorgesehen, dass mittels einer solchen Zeitskalenanalyse längerfristige Änderungen des Motordrehmoments ermittelt werden und/oder von kurzfristigeren Änderungen, die beispielsweise auf den Betrieb von Verbrauchern, wie Klimaanlage oder Servolenkung oder dergleichen, zurückzuführen sind, separiert werden können.

Vorzugsweise ist vorgesehen, dass zur Ermittlung und/oder Überwachung von Veränderungen des Momentenübertragungsverhaltens der Reibungskupplungseinrichtung unterschiedliche Funktionen des Motormomentensignals verwendet und / oder überwacht und/oder ausgewertet und/oder verglichen werden.

Bevorzugt ist ferner, dass zur Ermittlung und/oder Überwachung von Veränderungen des Momentenübertragungsverhaltens wenigstens eine PT1 -Filterung durchgeführt wird.

Bevorzugt wird während der Ermittlung und/oder Überwachung der Veränderungen des Momentenübertragungsverhaltens der Reibungskupplungseinrichtung die Motordrehzahl konstant gehalten, bzw. ist die Motordrehzahl konstant.

Bevorzugt wird das Verfahren gestartet oder durchgeführt, wenn die Kupplungseinrichtung schlupft, und insbesondere im Kriechbetrieb betrieben wird, und zwar insbesondere bei laufender Brennkraftmaschine. Ein Kriechbetrieb ist dabei insbesondere ein Betrieb der Kupplungseinrichtung, bei der sie ein geringes Moment übertragen kann. Ein solcher Kriechbetrieb kann insbesondere beispielsweise zum Einparken oder dergleichen vorgesehen sein und elektronisch gesteuert werden.

Bevorzugt ist ferner, dass das Verfahren gestartet und durchgeführt wird, wenn eine der Raddrehzahlen oder vorbestimmte Raddrehzahlen oder alle Raddrehzahlen gleich Null sind oder für wenigstens eine vorbestimmte Zeitperiode Null sind.

In einer bevorzugten Gestaltung wird ein erfindungsgemäßes Verfahren durchgeführt, und anschließend die Kupplungseinrichtung gemäß den Ergebnissen hinsichtlich der Veränderung des Übertragungsverhaltens der Kupplungseinrichtung gesteuert.

Vorzugsweise wird wenigstens ein Abfluss der Motorleistung, die an einen, insbesondere außerhalb des Antriebsstrangs angeordneten, Verbraucher fließt, im Ergebnis berücksichtigt. Ein solcher Verbraucher kann beispielsweise, ohne dass die Erfindung hierdurch beschränkt werden soll, eine Klimaanlage oder eine Servolenkung oder ein anderer Verbraucher sein.

Die elektronisch gesteuerte Kupplungseinrichtung weist Reibelemente auf sowie einen Stellmechanismus und ein elektronisches Steuergerät. Das elektronische Steuergerät kann den Stellmechanismus steuern und der Stellmechanismus kann in Abhängigkeit dieser Steuerungssignale die Reibelemente relativ zueinander verstellen, so dass das von der elektronisch gesteuerten Kupplungseinrichtung übertragbare Moment variiert werden kann. Erfindungsgemäß ist insbesondere vorgesehen, dass das elektronische Steuergerät ferner ein erfindungsgemäßes Verfahren steuert.

Der Stellmechanismus kann beispielsweise Elektromotoren aufweisen, die vom elektronischen Steuergerät gesteuert werden.

Unter dem Begriff "Steuern" ist im Sinne der vorliegenden Erfindung insbesondere "Regeln" und / oder "Steuern" im Sinne der DIN zu verstehen. Entsprechendes gilt für von dem Begriff "Steuern" abgeleitete Begriffe.

Im folgenden werden nun einige beispielhaft bzw. bevorzugte Aspekte der erfindungsgemäßen Gestaltungen anhand der Figuren erläutert, wodurch die Erfindung allerdings nicht beschränkt werden soll.

Dabei zeigt:
- Fig. 1: die Schritte eines beispielhaften erfindungsgemäßen Verfahrens in schematischer Darstellung;
- Fig. 2: die Schritte eines beispielhaften erfindungsgemäßen Verfahrens in schematischer Darstellung; und
- Fig. 3: beispielhafte Drehmoment-Zeit-Verläufe, die beim Betrieb eines Kraftfahrzeugs gegeben sein können.

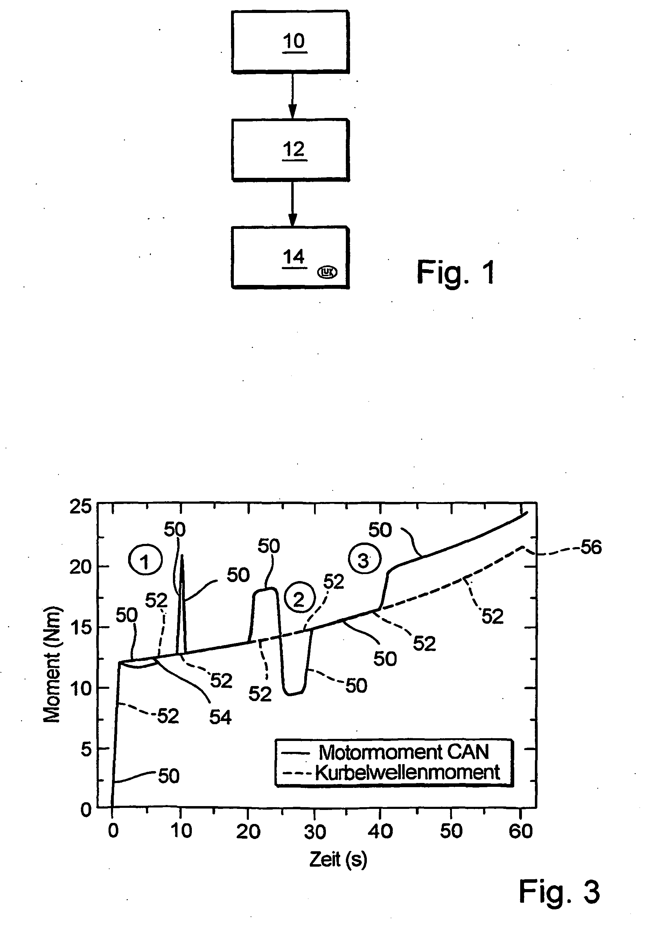

Fig. 1 zeigt die Schritte eines beispielhaften erfindungsgemäßen Verfahrens in schematischer Darstellung.

In Schritt 10 wird wenigstens ein Eingangssignal erfasst. Dieses Eingangssignal kann beispielsweise der zeitliche Verlauf eines Drehkennwerte eines Motors eines Kraftfahrzeugs und/oder ein Drehkennwert eines Antriebsstrangabschnitts eines Kraftfahrzeugs und/oder eine jeweils korrespondierende Leistung sein.

In Schritt 12 wird eine Verarbeitung oder Auswertung des Eingangssignals eingeleitet und durchgeführt.

Diese Auswertung und/oder Verarbeitung ist insbesondere so, dass das Eingangssignal mehrfach verarbeitet bzw. ausgewertet wird, und zwar insbesondere parallel ausgewertet und verarbeitet wird, so dass (parallel) mehrfach das gleiche Eingangssignal einer Auswertung oder Verarbeitung zugeführt wird.

In Schritt 14 wird das Verfahren beendet.

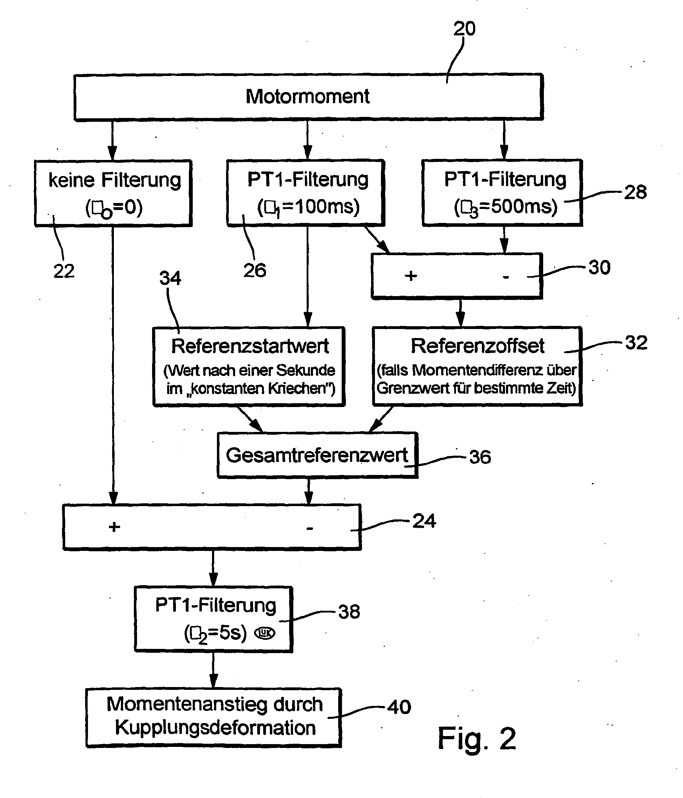

Fig. 2 zeigt die Schritte eines beispielhaften erfindungsgemäßen Verfahrens in schematischer Darstellung

Im Schritt 20 wird das Motormoment bzw. der Verlauf des Motormoments bereitgestellt.

Dieses gleiche Eingangssignal bzw. dieses Motormomentsignat wird gemäß unterschiedlichen Charakteristiken verarbeitet bzw. ausgewertet, und zwar hier mittels einer Multiskalen-Zeitanalyse, wie im folgenden gezeigt wird.

Im Schritt 22 wird das in Schritt 20 bereitgestellte Motormomentensignal ungefiltert bzw. mit der Zeitkonstanten τ=0 für einen Vergleich im Schritt 24 bereitgestellt.

Im wesentlichen parallel hierzu wird im Schritt 26 das im Schritt 20 bereitgestellte Motormomentensignal einer PT1-Filterung unterzogen, und zwar im Beispiel hier mit einer Zeitkonstanten von τ₁=100 ms.

Ebenfalls im wesentlichen zeitlich parallel hierzu wird im Schritt 28 das im Schritt 20 bereitgestellte Motormomentensignal ebenfalls einer PT1-Filterung unterzogen, deren Zeitkonstante allerdings von der PT1-Filterung im Schritt 26 abweicht und hier τ₃=500 ms beträgt.

Es können auch weitere, parallele PT1-Flterungen vorgesehen sein, denen das im Schritt 20 bereitgestellte Eingangssignal (Motormomentensignal) zugeführt wird und die in der Gestaltung gemäß Fig. 2 nicht dargestellt sind.

Im Schritt 30 werden die Auswerteergebnisse der PT1-Filterungen gemäß den Schritten 26 und Schritt 28 miteinander verglichen, und zwar indem die Differenz zwischen den Ergebnissen dieser PT1-Filterungen gebildet wird.

Das Ergebnis dieser Differenzbildung wird im Schritt 32 als Referenzoffset bereitgestellt.

Es sei angemerkt, dass bei der Differenzbildung im Schritt 30 das Ergebnis der PT1-Filterung mit größerer Zeitkonstante von dem Ergebnis der PT1-Filterung mit geringerer Zeitkonstante abgezogen wird.

Im Schritt 34 wird ein Referenzstartwert bereitgestellt, wobei dieser Referenzstartwert hier dem Ergebnis der PT1-Filterung entspricht, die im Schritt 26 durchgeführt wurde. Der Referenzstartwert ist also das Ergebnis der PT1-Filterung mit geringerer Zeitkonstante, das dem Vergleich im Schritt 30 zugeführt wird.

Im Schritt 36 wird aus dem Referenzstartwert und dem Referenzoffset ein Gesamtreferenzwert ermittelt. Hierzu wird das Referenzoffset zum Referenzstartwert addiert.

Das Ergebnis bzw. der Gesamtreferenzwert wird zum Vergleich gemäß Schritt 24 bereitgestellt.

Der im Schritt 24 durchgeführte Vergleich ist hier eine Differenzbildung. Dabei wird der Gesamtreferenzwert von dem ungefilterten bzw. ursprünglichen bzw. unveränderten Motormomentensignal abgezogen.

Die hier gegebene Abweichung ist auf eine Kupplungsdeformation zurückzuführen.

Das Ergebnis der Differenzbildung gemäß Schritt 24 wird erneut einer PT1-Filterung unterzogen, die im Schritt 38 durchgeführt wird und hier eine Zeitkonstante von τ₂=5 Sekunden aufweist.

Im Schritt 40 wird als Ergebnis der Motormomentenanstieg bereitgestellt, der auf eine Kupplungsdeformation zurückzuführen ist.

Fig. 3 zeigt beispielhafte Drehmoment-Zeit-Verläufe, die beim Betrieb eines Kraftfahrzeugs gegeben sein können.

Dargestellt sind in Fig. 3 insbesondere ein über einen CAN-Bus bereitgestelltes, berechnetes Motormoment 50 sowie ein Kurbelwellenmoment 52.

Beim Kriechen mit schlupfender Kupplung und stationärer Motordrehzahl entspricht das übertragene Kupplungsmoment im wesentlichen dem Kurbelwellenmoment 52.

Das Motormoment 50, das in Fig. 3 dargestellt ist, ist ein berechnetes Motormoment.

Das berechnete Motormoment 50 entspricht, wie aus Fig. 3 erkenntlich, weitgehend dem Kurbelwellenmoment 52.

Wenn jedoch zusätzliche Verbraucher hinzugeschaltet werden, wie zum Beispiel Klimaanlage oder Servolenkung oder dergleichen, ändert sich das über CAN-Bus bereitgestellte, berechnete Motormoment kurzzeitig, wie in den Bereichen 1, 2 und 3 in Fig. 3 zu erkennen ist (Zahlen eingekreist), nicht jedoch das Kurbelwellenmoment 52.

Um beispielsweise solche kurzzeitigen Einflüsse zu eliminieren und lediglich den längerfristigen Anstieg des Kurbelwellenmoments 52 bzw. des Motormoments 50 zu erfassen oder zu ermitteln, kann das erfindungsgemäße Verfahren ebenfalls durchgeführt werden.

Der kontinuierliche Anstieg des Moments, der durch die Bezugszeichen 54 und 56 in seinen Endpunkten verdeutlicht wird, ist hier auf eine Kupplungsverformung und/oder Kupplungserwärmung zurückzuführen.

Dieser Einfluss kann mittels eines erfindungsgemäßen Verfahrens ermittelt werden.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen und/oder Materialien, die zum Beispiel durch Kombination oder Abwandlung von einzelnen in Verbindung mit den in der allgemeinen Beschreibung und Ausführungsformen sowie den Ansprüchen beschriebenen und in den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Herstell-, Prüf- und Arbeitsverfahren betreffen. Die Erfindung ist aber durch die folgenden Ansprüche definiert:

## Patentansprüche

1. Verfahren zum Betreiben und / oder Steuern eines Kraftfahrzeug-Antriebsstranges und / oder wenigstens eines seiner Bauteile, wobei dieser Antriebsstrang antriebsseitig mit einer Brennkraftmaschine gekoppelt ist und wobei in diesem Antriebsstrang eine Kupplungseinrichtung sowie eine Getriebeeinrichtung angeordnet ist und wobei abtriebsseitig des Antriebsstranges Räder so angeordnet sind, dass sie von der Brennkraftmaschine über den Antriebsstrang angetrieben werden können, **dadurch gekennzeichnet, dass** wenigstens ein Eingangssignal, welches der zeitliche Verlauf wenigstens eines Drehkennwerts des Motors eines Antriebstrangabschnitts und / oder die jeweils korrespondierende Leistung ist, in einem Zeitfenster erfasst und parallel mehrfach gemäß unterschiedlichen Charakteristiken elektronisch verarbeitet und / oder ausgewertet wird, und dass mittels wenigstens eines Vergleichs der verschiedenen Verarbeitungs- und / oder Auswerteergebnisse des gleichen Eingangssignals ermittelt wird, ob sich das Übertragungsverhalten des Antriebsstranges oder wenigstens eines vorbestimmten Antriebsstrangbauteils verändert.

2. Verfahren nach Anspruch 1, **dadurch gekennzeichnet, dass** zur Verarbeitung und / oder Auswertung zumindest eine PT1-Filterung verwendet wird.

3. Verfahren nach einem der vorangehenden Ansprüche, **dadurch gekennzeichnet, dass** die Verarbeitung und / oder Auswertung gemäß wenigstens einer Charakteristik so ist, dass das unveränderte Eingangssignal einem Vergleich zugeführt wird.

4. Verfahren nach einem der vorangehenden Ansprüche, **dadurch gekennzeichnet, dass** wenigstens zwei PT1-Filterungen im Rahmen der Verarbeitung und / oder Auswertung durchgeführt werden, die sich durch ihre Zeitkonstante unterscheiden, und dass das gleiche Eingangssignal, insbesondere parallel, einerseits der einen PT1-Filgerung zugeführt wird und andererseits der anderen PT1-Filterung.

5. Verfahren nach Anspruch 4, **dadurch gekennzeichnet, dass** sich die Zeitkonstanten zweier PT1-Filterungen wenigstens um den Faktor "zwei" unterscheiden.

6. Verfahren nach einem der vorangehenden Ansprüche, **dadurch gekennzeichnet, dass** wenigstens ein Ergebnis eines Vergleichs im Rahmen der Ermittlung, ob sich das Übertragungsverhalten des Antriebsstranges oder eines Antriebsstrangbauteils verändert hat, erneut elektronisch verarbeitet und / oder ausgewertet und / oder mit einem Auswerte- und / oder Verarbeitungs- und / oder Vergleichsergebnis verglichen wird.

7. Verfahren zum Betreiben einer Reibungskupplungseinrichtung, die in einem Antriebsstrang angeordnet ist, welcher von einer Antriebseinrichtung, wie Brennkraftmaschine, belastet werden kann, **dadurch gekennzeichnet, dass** ermittelt und / oder überwacht wird, ob sich das übertragbere Moment der Reibungskupplungseinrichtung bei gleicher Stellung dieser Reibungskupplungseinrichtung verändert, und zwar insbesondere durch Erwärmung und / oder Verformung der Reibungskupplungseinrichtung.

8. Verfahren nach Anspruch 7, **dadurch gekennzeichnet, dass** die Reibungskupplung in einem Antriebsstrang eines Kraftfahrzeuges angeordnet ist und zur Ermittlung und / oder Überwachung von Veränderungen des Momentenübertragungsverhaltens der Reibungskupplungseinrichtung wenigstens ein Betriebskennwert des Kraftfahrzeuges verwendet und / oder ausgewertet wird.

9. Verfahren nach einem der Ansprüche 7 und 8, **dadurch gekennzeichnet, dass** zur Ermittlung und / oder Überwachung von Veränderungen des Momentenübertragungsverhaltens der Reibungskupplungseinrichtung das Motormoment einer Brennkraftmaschine oder dessen zeitliche Ableitung ausgewertet wird.

10. Verfahren nach Anspruch 9, **dadurch gekennzeichnet, dass** dass Motormoment, das ausgewertet und / oder verarbeitet wird, berechnet wird und / oder über einen CAN-Bus bereitgestellt wird.

11. Verfahren nach einem der Ansprüche 7 bis 10, **dadurch gekennzeichnet, dass** zur Ermittlung und / oder Überwachung von Veränderungen des Momentenübertragungsverhaltens der Reibungskupplungseinrichtung das Kurbelwellenmoment und / oder die zeitliche Ableitung des Kurbelwellenmoments einer von einer Brennkraftmaschine antreibbaren oder angetriebenen Kurbelwelle ausgewertet wird.

12. Verfahren nach einem der Ansprüche 7 bis 11, **dadurch gekennzeichnet, dass** zur Ermittlung und / oder Überwachung von Veränderungen des Momentenübertragungsverhaltens der Reibungskupplungseinrichtung eine Multizeitskalen-Analyse durchgeführt wird.

13. Verfahren nach einem der Ansprüche 7 bis 12, **dadurch gekennzeichnet, dass** zur Ermittlung und / oder Überwachung von Veränderungen des Momentenübertragungsverhaltens der Reibungskupplungseinrichtung unterschiedliche Funktionen des Motormomentensignals, und insbesondere des zeitlichen Verlaufs des Motormomentensignals, überwacht und / oder ausgewertet und / oder verglichen werden.

14. Verfahren nach einem der Ansprüche 7 bis 13, **dadurch gekennzeichnet, dass** zur Ermittlung und / oder Überwachung von Veränderungen des Momentenübertragungsverhaltens der Reibungskupplungseinrichtung die Funktion oder wenigstens eine Funktion eine PT1-Filterung ist.

15. Verfahren nach einem der Ansprüche 7 bis 14, **dadurch gekennzeichnet, dass** bei der Ermittlung und / oder Überwachung von Veränderungen des Momentenübertragungsverhaltens der Reibungskupplungseinrichtung die Motordrehzahl konstant ist und / oder konstant gehalten wird.

16. Verfahren nach einem der Ansprüche 7 bis 15, **dadurch gekennzeichnet, dass** das Verfahren gestartet und / oder durchgeführt wird, wenn die Kupplungseinrichtung schlupft, und insbesondere wenigstens die Kupplungseinrichtung im Kriechbetrieb betrieben wird.

17. Verfahren nach Anspruch 16, **dadurch gekennzeichnet, dass** das Verfahren gestartet und / oder durchgeführt wird, wenn eine Raddrehzahl und / oder vorbestimmte Raddrehzahlen und / oder alle Raddrehzahlen gleich null sind oder für wenigstens eine vorbestimmte Zeitperiode gleich Null sind.

18. Verfahren nach einem der Ansprüche 7 bis 17, **dadurch gekennzeichnet, dass** die Kupplungseinrichtung in Abhängigkeit des Ergebnisses gesteuert wird, das gemäß einem vorangehenden Verfahren hinsichtlich der Veränderung des Übertragungsverhaltens der Kupplungseinrichtung ermittelt wird.

19. Verfahren nach einem der vorangehenden Ansprüche, **dadurch gekennzeichnet, dass** wenigstens ein Leistungsabfluss der Motorleistung, der an einen, insbesondere außerhalb des Antriebsstranges angeordneten Verbraucher fließt, im Ergebnis berücksichtigt wird.

20. Verfahren nach wenigstens zwei Ansprüchen der vorangehenden Ansprüche.

21. Elektronisch gesteuerte Kupplungseinrichtung, die als Reibungskupplungseinrichtung gestaltet ist und Reibelemente aufweist sowie einen Stellmechanismus und ein elektronisches Steuergerät, wobei das elektronische Steuergerät den Stellmechnismus steuern kann, und dieser Stellmechanismus in Abhängigkeit der entsprechenden Steuerungssignale die Reibelemente relativ zueinander verstellen kann, so dass das von der Elektronisch gesteuerten Kupplungseinrichtung übertragbare Moment variiert werden kann, **dadurch gekennzeichnet, dass** das Steuergerät ein Verfahren gemäß einem der vorangehenden Ansprüche steuert.

## Claims

1. Method for operating and/or controlling a motor-vehicle drive train and/or at least one of its components, with this drive train being coupled on the drive-side to an internal combustion engine, and with a clutch device and a gear mechanism device being arranged in this drive train, and with wheels being arranged on the output side of the drive train such that they can be driven by the internal combustion engine via the drive train, **characterized in that** at least one input signal, which is the time profile of at least one rotation characteristic value of the motor of a drive train section and/or the respectively corresponding power, is detected in a time window and is electronically processed and/or evaluated in parallel several times in accordance with different characteristics, and **in that** at least one comparison of the various processing and/or evaluation results of the same input signal is used to establish whether the transmission behaviour of the drive train or at least one predetermined drive train component changes.

2. Method according to Claim 1, **characterized in that** at least one PT1 filtering is used for processing and/or evaluation purposes.

3. Method according to either of the preceding claims, **characterized in that** the processing and/or evaluation according to at least one characteristic is such that the unchanged input signal is fed to a comparison.

4. Method according to one of the preceding claims, **characterized in that** at least two PT1 filterings are carried out as part of the processing and/or evaluation, which PT1 filterings differ by virtue of their time constant, and **in that** the same input signal is fed, in particular in parallel, firstly to one PT1 filtering and secondly to the other PT1 filtering.

5. Method according to Claim 4, **characterized in that** the time constants of two PT1 filterings differ at least by the factor "two".

6. Method according to one of the preceding claims, **characterized in that** at least one result of a comparison is again electronically processed and/or evaluated and/or compared with an evaluation and/or processing and/or comparison result as part of the process of establishing whether the transmission behaviour of the drive train or of a drive train component has changed.

7. Method for operating a friction clutch device which is arranged in a drive train which can be loaded by a drive device, such as an internal combustion engine, **characterized in that** the method establishes and/or monitors whether the torque, which can be transmitted, of the friction clutch device changes in the same position of this friction clutch device, specifically in particular due to heating and/or deformation of the friction clutch device.

8. Method according to Claim 7, **characterized in that** the friction clutch is arranged in a drive train of a motor vehicle, and at least one operating characteristic value of the motor vehicle is used and/or evaluated in order to establish and/or monitor changes in the torque transmission behaviour of the friction clutch device.

9. Method according to either of Claims 7 and 8, **characterized in that** the engine torque of an internal combustion engine or its derivative with respect to time is evaluated in order to establish and/or monitor changes in the torque transmission behaviour of the friction clutch device.

10. Method according to Claim 9, **characterized in that** the engine torque which is evaluated and/or processed is calculated and/or provided by means of a CAN bus.

11. Method according to one of Claims 7 to 10, **characterized in that** the crankshaft torque and/or the derivative with respect to time of the crankshaft torque of a crankshaft which can be or is driven by an internal combustion engine are/is evaluated in order to establish and/or monitor changes in the torque transmission behaviour of the friction clutch device.

12. Method according to one of Claims 7 to 11, **characterized in that** a multiple timescale analysis is carried out in order to establish and/or monitor changes in the torque transmission behaviour of the friction clutch device.

13. Method according to one of Claims 7 to 12, **characterized in that** different functions of the engine torque signal, and in particular the time profile of the engine torque signal, are monitored and/or evaluated and/or compared in order to establish and/or monitor changes in the torque transmission behaviour of the friction clutch device.

14. Method according to one of Claims 7 to 13, **characterized in that** the function or at least one function is a PT1 filtering, in order to establish and/or monitor changes in the torque transmission behaviour of the friction clutch device.

15. Method according to one of Claims 7 to 14, **characterized in that** the engine rotation speed is constant and/or is kept constant when establishing and/or monitoring changes in the torque transmission behaviour of the friction clutch device.

16. Method according to one of Claims 7 to 15, **characterized in that** the method is started and/or carried out when the clutch device slips, and in particular at least the clutch device is operated in creep mode.

17. Method according to Claim 16, **characterized in that** the method is started and/or carried out when a wheel rotation speed and/or predetermined wheel rotation speeds and/or all wheel rotation speeds are zero or are zero for at least a predetermined period of time.

18. Method according to one of Claims 7 to 17, **characterized in that** the clutch device is controlled as a function of the result which is established with regard to the change in the transmission behaviour of the clutch device according to a preceding method.

19. Method according to one of the preceding claims, **characterized in that** at least one power outflow of the engine power, which flows to a load which is arranged, in particular, outside the drive train, is taken into account in the result.

20. Method according to at least two claims of the preceding claims.

21. Electronically controlled clutch device which is configured as a friction clutch device and has friction elements and an actuating mechanism and an electronic controller, it being possible for the electronic controller to control the actuating mechanism and this actuating mechanism being able to adjust the friction elements relative to one another as a function of the corresponding control signals, so that the torque which can be transmitted by the electronically controlled clutch device can be varied, **characterized in that** the controller controls a method according to one of the preceding claims.

## Revendications

1. Procédé pour utiliser et/ou commander une chaîne motrice de véhicule automobile et/ou au moins l'un de ses composants, cette chaîne motrice étant accouplée du côté de l'entraînement avec un moteur à combustion interne et un dispositif d'accouplement ainsi qu'un dispositif à engrenage étant disposés dans cette chaîne motrice, des roues étant disposées du côté de la sortie de la chaîne motrice de telle sorte qu'elles puissent être entraînées par le moteur à combustion interne par le biais de la chaîne motrice, **caractérisé en ce qu'**au moins un signal d'entrée, lequel est le tracé dans le temps d'au moins une valeur caractéristique de rotation du moteur d'une portion de la chaîne motrice et/ou la puissance correspondante respective, est acquis dans un créneau temporel et est soumis à un traitement et/ou une interprétation électronique parallèle multiple selon différentes caractéristiques, et qu'au moyen d'au moins une comparaison entre les différents résultats du traitement et/ou de l'interprétation du même signal d'entrée, on détermine si le rapport de transmission de la chaîne motrice ou d'au moins un composant prédéfini de la chaîne motrice change.

2. Procédé selon la revendication 1, **caractérisé en ce qu'**au moins un filtrage PT1 est utilisé pour le traitement et/ou l'interprétation.

3. Procédé selon l'une des revendications précédentes, **caractérisé en ce que** le traitement et/ou l'interprétation selon au moins une caractéristique est telle que le signal d'entrée non modifié est acheminé à une comparaison.

4. Procédé selon l'une des revendications précédentes, **caractérisé en ce qu'**au moins deux filtrages PT1 sont effectués dans le cadre du traitement et/ou de l'interprétation, lesquels se différentient par leur constante de temps, et que le même signal d'entrée est acheminé, notamment en parallèle, d'un côté à un filtrage PT1 et de l'autre côté à l'autre filtrage PT1.

5. Procédé selon la revendication 4, **caractérisé en ce que** les constantes de temps des deux filtrages PT1 se différentient au moins d'un facteur « deux ».

6. Procédé selon l'une des revendications précédentes, **caractérisé en ce qu'**au moins un résultat d'une comparaison dans le cadre de la détermination de la modification ou non du rapport de transmission de la chaîne motrice ou d'un composant de la chaîne motrice est de nouveau soumis à un traitement et/ou une interprétation électronique et/ou comparé avec un résultat d'interprétation et/ou de traitement et/ou de comparaison.

7. Procédé pour utiliser un dispositif d'accouplement à friction qui est disposé dans une chaîne motrice, lequel peut être soumis à une charge par un dispositif d'entraînement tel qu'un moteur à combustion interne, **caractérisé en ce qu'**on détermine et/ou on surveille si le couple du dispositif d'accouplement à friction pouvant être transmis varie avec une même position de ce dispositif d'accouplement à friction, et ce notamment par échauffement et/ou déformation du dispositif d'accouplement à friction.

8. Procédé selon la revendication 7, **caractérisé en ce que** le dispositif d'accouplement à friction est disposé dans une chaîne de transmission d'un véhicule automobile et au moins une valeur caractéristique de fonctionnement du véhicule automobile est utilisée et/ou interprétée pour déterminer et/ou surveiller les modifications des conditions de transmission du couple du dispositif d'accouplement à friction.

9. Procédé selon l'une des revendications 7 et 8, **caractérisé en ce que** le couple moteur d'un moteur à combustion interne ou sa dérivée dans le temps est interprété pour déterminer et/ou surveiller les modifications des conditions de transmission du couple du dispositif d'accouplement à friction.

10. Procédé selon la revendication 9, **caractérisé en ce que** le couple moteur qui est interprété et/ou traité est calculé et/ou fourni par le biais d'un bus CAN.

11. Procédé selon l'une des revendications 7 à 10, **caractérisé en ce que** le couple du vilebrequin et/ou la dérivée dans le temps du couple du vilebrequin d'un vilebrequin pouvant être entraîné ou étant entraîné par un moteur à combustion interne est interprété pour déterminer et/ou surveiller les modifications des conditions de transmission du couple du dispositif d'accouplement à friction.

12. Procédé selon l'une des revendications 7 à 11, **caractérisé en ce qu'**une analyse à échelles de temps multiples est effectuée pour déterminer et/ou surveiller les modifications des conditions de transmission du couple du dispositif d'accouplement à friction.

13. Procédé selon l'une des revendications 7 à 12, **caractérisé en ce que** différentes fonctions du signal du couple moteur, notamment le tracé dans le temps du signal du couple moteur, sont surveillées et/ou interprétées et/ou comparées pour déterminer et/ou surveiller les modifications des conditions de transmission du couple du dispositif d'accouplement à friction.

14. Procédé selon l'une des revendications 7 à 13, **caractérisé en ce que** la fonction ou au moins une fonction pour déterminer et/ou surveiller les modifications des conditions de transmission du couple du dispositif d'accouplement à friction est un filtrage PT1.

15. Procédé selon l'une des revendications 7 à 14, **caractérisé en ce que** la vitesse de rotation du moteur est constante et/ou maintenue constante pour déterminer et/ou surveiller les modifications des conditions de transmission du couple du dispositif d'accouplement à friction.

16. Procédé selon l'une des revendications 7 à 15, **caractérisé en ce que** le procédé est démarré et/ou exécuté lorsque le dispositif d'accouplement patine et notamment lorsqu'au moins le dispositif d'accouplement fonctionne en mode patinage.

17. Procédé selon la revendication 16, **caractérisé en ce que** le procédé est démarré et/ou exécuté lorsque la vitesse de rotation d'une roue et/ou les vitesses de rotation de roues prédéfinies et/ou les vitesses de rotation de toutes les roues sont égales à zéro ou égales à zéro pendant au moins une période de temps prédéfinie.

18. Procédé selon l'une des revendications 7 à 17, **caractérisé en ce que** le dispositif d'accouplement est commandé en fonction du résultat qui est déterminé conformément à un procédé ci-dessus concernant la modification des conditions de transmission du couple du dispositif d'accouplement.

19. Procédé selon l'une des revendications précédentes, **caractérisé en ce qu'**au moins un écoulement de puissance du moteur qui s'écoule sur une charge disposée notamment à l'extérieur de la chaîne motrice est pris en compte dans le résultat.

20. Procédé selon au moins deux revendications des revendications précédentes.

21. Dispositif d'accouplement à commande électronique qui est réalisé sous la forme d'un dispositif d'accouplement à friction et qui présente des éléments de friction ainsi qu'un mécanisme de positionnement et un module de commande électronique, le module de commande électronique pouvant commander le mécanisme de positionnement et ce mécanisme de positionnement pouvant positionner les éléments de friction les uns par rapport aux autres en fonction des signaux de commande correspondants de sorte que le couple pouvant être transmis par le dispositif d'accouplement à commande électronique puisse varier, **caractérisé en ce que** le module de commande contrôle un procédé selon l'une des revendications précédentes.
